(19) Europäisches Patentamt
European Patent Office
Office européen des brevets

(11) Publication number: **0 126 176 B1**

# (12) EUROPEAN PATENT SPECIFICATION

(45) Date of publication of patent specification: **03.06.92**

(51) Int. Cl.[5]: **C08G 69/48**, D21H 13/26

(21) Application number: **83105589.2**

(22) Date of filing: **07.06.83**

The file contains technical information submitted after the application was filed and not included in this specification

## (54) Wet strength resins.

(30) Priority: **27.04.83 US 488893**
**27.04.83 US 488894**

(43) Date of publication of application:
**28.11.84 Bulletin 84/48**

(45) Publication of the grant of the patent:
**03.06.92 Bulletin 92/23**

(84) Designated Contracting States:
**AT BE CH DE FR GB IT LI NL SE**

(56) References cited:
**FR-A- 2 004 880**
**FR-A- 2 209 801**
**US-A- 2 926 154**
**US-A- 3 311 594**
**US-A- 3 793 279**
**US-A- 4 388 439**

(73) Proprietor: **HERCULES INCORPORATED**
**Hercules Plaza**
**Wilmington Delaware 19899(US)**

(72) Inventor: **Maslanka, William Walter**
**130 South Bank Road**
**Landenberg Pennsylvania 19350(US)**

(74) Representative: **Lederer, Franz, Dr. et al**
**Lederer, Keller & Riederer Patentanwälte**
**Lucile-Grahn-Strasse 22**
**W-8000 München 80(DE)**

EP 0 126 176 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to the synthesis of wet and dry strength resins for use in the manufacture of paper, the broke of which can be easily and readily repulped.

Broke is a waste product of the paper industry which, if not recovered and utilized, represents a substantial loss. It is customary to repulp the broke and reuse it in the papermaking process. Wet strength broke is difficult to repulp, and the repulping of wet strength broke is discussed by Schmalz in TAPPI, Vol. 44, pages 275-280 (April 1961).

Cationic, water-soluble, thermosetting resins derived by the reaction of aminopolyamides with epichlorohydrin are known wet strength resins for paper. Typical of these wet strength resins are the resins of U.S. Patent 2,926,154 to Keim derived by the reaction of epichlorohydrin and an aminopolyamide produced from a polyalkylene polyamine and a $C_3$ to $C_{10}$ saturated aliphatic dicarboxylic acid such as malonic acid, glutaric, acid, adipic acid, and the like. British patent 865,727 to Hercules Powder Co. and U.S. Patent 3,311,594 to Earle, Jr. also disclose resins derived by reaction of epichlorohydrin and an aminopolyamide derived from a $C_3$ to $C_{10}$ saturated dicarboxylic acid and N-bis(aminopropyl)methylamine, also known as methylbisaminopropylamine. See also U.S. Patent 3,793,279 to Lipowski, U.S. Patent 3,887,510 to Chan et al., and U.S. Patent 3,891,589 to Ray-Chaudhuri which disclose the use of diesters derived from $C_2$ to $C_{20}$ saturated dicarboxylic acids in the preparation of aminopolyamides which are subsequently reacted with epichlorohydrin. Further, in U.S. Patent 3,793,279 Lipowski teaches producing cationic wet strength resins by reacting certain chain-extended, amineterminated base polyamides with epichlorohydrin and discloses that the broke from papers which are treated with these resins are more easily recovered than broke from paper treated with other wet strength resins such as those disclosed in U.S. Patent 2,926,154 to Keim. Lipowski also indicates that acids which decarboxylate, such as oxalic acid, are not suitable for making wet strength resins and shows that the products prepared from diethylenetriamine and oxalic acid, with or without subsequent amine termination and chain extension, do not, upon reaction with epichlorohydrin, provide cationic resins having wet strength properties. Other U.S. patents which describe cationic, thermosetting, wet strength resins for paper are 3,224,990; 3,240,664; 3,332,901; and 3,700,623.

Now, in accordance with this invention, it has been found that the resins prepared by reacting an epihalohydrin, such as epichlorohydrin, with a polyaminopolyamide derived by the reaction of a saturated dicarboxylic acid component comprising oxalic acid or a diester of oxalic acid with methylbis(3-aminopropyl)amine impart good wet strength to paper and that the paper can be repulped using relatively mild repulping conditions. Accordingly, the present invention relates to a process for preparing an aqueous solution of a water-soluble, cationic thermosetting resin exhibiting high wet strength properties and providing a paper broke which is easily reworked, which process consists of reacting methylbis (3-aminopropyl) amine in a mole ratio of 0,9:1 to 1,2:1 with a saturated dicarboxylic acid component wherein at least 20 mole percent of the acid component is oxalic acid or a diester of oxalic acid, whereby when the entire dicarboxylic acid component is oxalic acid, or when the acid component contains oxalic acid as well as different dicarboxylic acids or esters and the oxalic acid is added before the other dicarboxylic acid components, then said oxalic acid is added gradually to the amine over a period of time sufficient to maintain the temperature at below 150 °C to prevent decomposition of the acid prior to reaction with the amine, to prepare a polyaminopolyamide containing tertiary amine groups, and then reacting the polyaminopolyamide in aqueous solution with 1-1,5 moles (per mole tertiary amine) of an epihalohydrin.

In the preparation of the resins of this invention, a saturated dicarboxylic acid component containing oxalic acid or a diester of oxalic acid is first reacted with methylbis(3-aminopropyl)amine to produce a long-chain polyaminopolyamide. The preferred diesters of oxalic acid are dimethyl oxalate, diethyl oxalate, and dipropyl oxalate. Oxalic acid or its diester can make up the entire dicarboxylic acid component, or a portion of the oxalic acid or its diester up to 80 mole percent can be replaced with one or more saturated dicarboxylic acids containing at least 4 carbon atoms and preferably 4 to 8 carbon atoms or their esters. Particularly preferred are adipic and glutaric acids and the diesters derived from these acids and $C_1$-$C_3$ saturated aliphatic monohydric alcohols such as methanol, ethanol, propanol, and isopropanol. Specific examples of the preferred diesters are dimethyl adipate, diethyl adipate, dipropyl adipate, dimethyl glutarate, diethyl glutarate, and dipropyl glutarate. The methylbis(3-aminopropyl)amine reactant, also refered to in the art as N-bis(aminopropyl)methylamine, has the formula

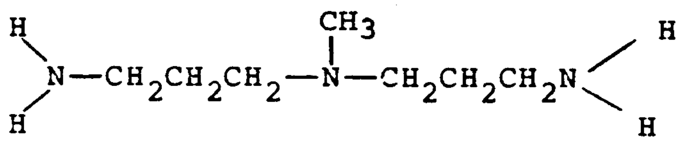

The polyaminopolyamide is then reacted in aqueous solution with an epihalohydrin to form a water-soluble cationic thermosetting resin.

Reaction of the dicarboxylic acid component containing oxalic acid or the diester of oxalic acid with the amine is preferably carried out neat but can also be carried out in a solution or dispersion of the reactants in a suitable solvent such as water and, alcohols. When the entire dicarboxylic acid component is oxalic acid, the acid is added gradually to the amine over a period of time sufficient to maintain the temperature at below 150 ° C and prevent decomposition of the acid prior to reaction with the amine. Then the temperature is raised from 150 ° C. to 200 ° C. and maintained thereat for a length of time sufficient to remove the water of polycondensation and produce a polyamide having an intrinsic viscosity of at least about 0.06. When the acid component contains oxalic acid as well as different dicarboxylic acids or esters, the oxalic acid and the different acids or esters are usually added separately to the amine. The preferred procedure involves first adding the oxalic acid to the amine while maintaining the temperature at below 150 ° C. and then reacting the oxalic acid with the amine prior to adding the other dicarboxylic acid(s) or ester(s) and completing the reaction. When the acid component contains the diester of oxalic acid and the diester of one or more different dicarboxylic acids, the diesters can be added separately or simultaneously. Temperatures employed in the reaction can vary between 110 ° C and 225 ° C. Preferred temperature range is 140 ° C to 200 ° C. Time of reaction depends on temperature and is inversely proportional thereto. Usually the reaction time will vary from about 1/2 to two hours.

In carrying out the reaction, it is preferred to use an amount of the dicarboxylic acid component sufficient to react substantially completely with the primary amine groups of the methylbis(3-aminopropyl)-amine. This will usually require a mole ratio of amine to acid component of from 0.9:1 to 1.2:1. The preferred mole ratio is 1:1.

In converting the polyaminopolyamide to a water-soluble cationic thermosetting resin, the polyaminopolyamide is reacted in aqueous solution with epihalohydrin, preferably epichlorohydrin. The reaction is carried out in solution, using the polyaminopolyamide in the form of its water-soluble acid salt in those cases where the free amine form of the polyaminopolyamide has limited water solubility. Usually the reaction is carried out at a temperature from about 40 ° C. to about 100 ° C. and preferably from about 45 ° C. to 85 ° C. until the viscosity of a 25% solids solution at 25 ° C. has reached about E-F or higher on the Gardner-Holdt scale or the Spence-Spurlin viscosity is at least about 20 and preferably ranges from about 22 to about 30 seconds.

The acid salt of the polyaminopolyamide is easily and readily prepared by adding to an aqueous dispersion of the polyaminopolyamide a water-soluble acid such as hydrochloric acid in an amount essentially stoichiometrically equivalent to the tertiary amines of the polyaminopolyamide whereby essentially all the tertiary amines are converted to the acid salt. Suitable acids for salt formation are water-soluble, are within the skill of the art, and include inorganic acids such as sulfuric acid, hydrochloric acid, nitric acid, and phosphoric acid, and organic acids such as acetic acid.

In the polyaminopolyamide-epihalohydrin reaction, it is preferred to use sufficient epihalohydrin to convert all tertiary amine groups to quaternary ammonium groups. Satisfactory resins can be prepared by using from 1 mole to 1.5 moles and preferably from 1.2 to 1.4 moles of epihalohydrin per mole of tertiary amine of the polyaminopolyamide. pH adjustment is usually not necessary during reaction. However, since the pH decreases during the reaction, it may be desirable in some cases to add alkali to combine with at least some of the acid formed. When the desired viscosity is reached, sufficient additional water is added to adjust the solids content of the resin solution to about 15% or less and the product cooled to room temperature, about 25 ° C. The resin will contain a plurality of reactive

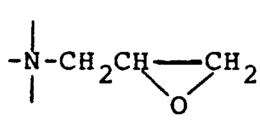

groups.

The resin is preferably stabilized against premature gelation by converting essentially all the reactive

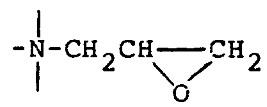

groups to inactive

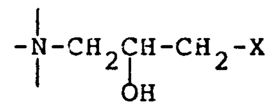

groups, X being the halogen of the epihalohydrin and chlorine when the epihalohydrin is epichlorohydrin.

The stabilization is accomplished by adding a water-soluble acid to the resin solution until essentially all the reactive groups are changed to the inactive form. This is accomplished by adding sufficient water-soluble acid to obtain and maintain a pH below about 3 and preferably of from about 1 to 3. The reactive groups are thereby changed to the inactive form and the resin solution will be stabilized against gelation.When the pH remains at the desired pH for a period of about one hour at room temperature (about 25 ° C.), it is relatively certain that the pH will not change and the resin solution is stabilized against gelation. By this means, stable solutions having a resins solids content of from about 10% to about 50% can be prepared.

Acids that can be employed in the above stabilization procedure are water-soluble acids such as hydrochloric acid, hydrobromic acid, hydrofluoric acid, hydroiodic acid, sulfuric acid, nitric acid, phosphoric acid, and acetic acid. Mixtures of two or more water-soluble acids can be used if desired.

Prior to use in the paper mill, the stabilized resin is "reactivated" by adjusting the pH of the resin solution to and maintaining it above about 8, preferably 10.5 and higher. Preferred pH range is 10.5 to 11.7. This reconverts essentially all the inactive

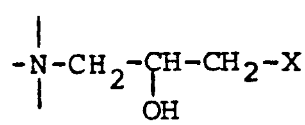

groups to the reactive cross-linking

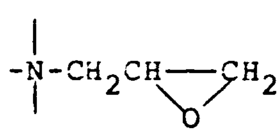

groups. This pH adjustment is made by the addition of a suitable organic or inorganic base such as the alkali metal hydroxides and carbonates, calcium hydroxide, benzyltrimethylammonium hydroxide, and tetramethylammonium hydroxide. The alkali metals include sodium, potassium, cesium, and lithium. The base is added preferably as an aqueous solution.

The polyamide-epichlorohydrin resins, prepared as herein described, may be incorporated into pulp slurry at any point on the wet end of the paper machine. However, prior to use, the stabilized resin must be reactivated as above set forth to convert the halohydrin groups to epoxide groups.

The resins of this invention exhibit high "off-the-machine" wet strength and moderate to high dry strength. For most purposes, adequate wet strength can be obtained by incorporating in the paper from about 0.2% to about 3% of the resin based on the dry weight of the pulp.

The invention is further illustrated by the following examples which demonstrate the best-known embodiments of the invention. In these examples, intrinsic viscosity (I.V.) measurements were determined at

25° C. on a 2% solution in 1M ammonium chloride and Brookfield viscosity measurements were determined at 25° C. using a #1 spindle at 60 r.p.m. unless otherwise indicated.

Example 1

Part A - Methylbis(3-aminopropyl)amine, 145.3 grams (1.0 mole) was charged to a resin kettle equipped with anchor stirrer, thermometer, heating mantle, nitrogen sparge, and Dean-Stark water trap with condenser. The charge was heated to 130° C. Anhydrous oxalic acid, 90.0 grams (1.0 mole) in 270 ml of water, was added as a slurry over a period of 15 minutes while keeping the temperature of the reaction mass below about 130° C. After the addition was complete, the temperature of the reaction mass was raised to about 180-190° C. and maintained at 180-190° C. for 1.25 hours while the water was removed therefrom. A very viscous polyaminopolyamide resulted, which was poured into an aluminum pan. The polyaminopolyamide had an I.V. of 0.105 at 25° C. and 1% concentration in m-cresol.

Part B - 39.9 grams of the polyaminopolyamide of Part A, 98 ml of water, and 19.6 grams of 37.5% aqueous HCl were thoroughly admixed to provide a 30% aqueous solution of the resulting salt, the pH of the solution being about 2. A portion equal to 117.9 grams of the 30% aqueous solution (35.4 grams, 0.15 mole of resin solids) was placed into a reaction vessel, and the pH of the solution was adjusted to 7.75 with 4 ml of 5 molar NaOH. Epichlorohydrin, 17.4 grams (0.188 mole), and then water, 36.6 ml, were added to give 30% reaction solids. The temperature of the resulting solution which was at room temperature (about 25° C.) was raised to 50-83° C. and the viscosity of the solution monitored. Periodic pH adjustments were made to maintain the pH at 7.1 to 8.0. When the Spence-Spurlin viscosity reached 25.9 seconds (4.7 hours), 316 ml of water were added and the pH was adjusted to 1.0 with 10 molar HCl. The resulting solution had a solids content of 10.0% by weight and a Brookfield viscosity of 20 mPas.

Example 2

A 50:50 by weight mixture of Rayonier bleached kraft pulp and Weyerhaeuser bleached hardwood kraft pulp was beaten to Canadian Standard freeness of 500 cc in a Noble and Wood cycle beater. The pulp was then adjusted to pH 7.5 with 10% NaOH and varying amounts, as specified in Table 1, based on the dry weight of pulp, of the polyaminopolyamide-epichlorohydrin resin prepared in Example 1 were added. The solution of Example 1 was reactivated for use by diluting 25 grams of the solution to about 3% solids with water, and adding, with mixing, 8.6 ml of 1N sodium hydroxide and 27.8 ml of water. The resulting solution had a resin solids content of about 2% and a pH of about 11.7. The pulp was sheeted on a Noble and Wood handsheet machine to provide handsheets having a basis weight of approximately 18.144 kg per ream (278.70 $m^2$) and the resulting handsheets were wet pressed to a 33% solids content and then dried at 105° C. for 45 seconds on a steam-heated drum drier to 3-4% moisture. The dry strength was tested "uncured" (after 7 days of natural aging) or "cured" (after 30 minutes at 80° C.). The sheets tested for wet strength were soaked for two hours in distilled water. Results are listed in Table 1.

Table 1

| % of Resin Added | Basis Weight | Tensile Strength ( kg/m) | | | |
|---|---|---|---|---|---|
| | | Dry | | Wet | |
| | | Uncured | Cured | Uncured | Cured |
| 0.25 | 18.00 | 367.7 | 390.9 | 54.0 | 63.0 |
| 0.50 | 17.96 | 373.0 | 398.0 | 71.9 | 79.8 |
| 0.75 | 17.96 | 419.4 | 415.9 | 76.6 | 90.3 |
| Blank | 18.14 | 308.8 | 315.9 | 10.7 | 10.7 |

Example 3

Handsheets were prepared in accordance with the procedure of Example 2, using 0.9% resin based on

the dry weight of the pulp. The handsheets gave a dry tensile of 387.3 (uncured) and 428.4 (cured), and a wet tensile of 76.4 (uncured) and 87.5 (cured) kg per m at a basis weight of 18.32 kg per ream. Samples of the uncured handsheets were repulped in aqueous NaOH at a temperature of 85 °C. Repulping of the paper sheets was carried out according to TAPPI Method 205 m-58 at a mixer speed of 2800 r.p.m., a pulp consistency of 1.3%, and a pH of 12. The degree of repulping (fiber separation) was measured and reported in integers ranging from 1-6, the integer 6 indicating substantially complete repulping. After 10 minutes, the degree of repulping was measured at 5; after 20 minutes, there was substantially complete repulping.

Example 4

Part A - Methylbis(3-aminopropyl)amine, 145.3 grams (1.0 mole) was charged to a resin kettle equipped with anchor stirrer, thermometer, heating mantle, nitrogen sparge, and Dean-Stark water trap with condenser, and the charge was heated to 135 °C. Oxalic acid, 45.0 grams (0.5 mole), was carefully added in small increments to keep the temperature of the reaction mass below 145 °C. After the addition was complete (about 1 hour), the temperature of the reaction mass was raised to 177 to 181 °C. and maintained thereat for about 1 hour until the water of polycondensation was removed. The temperature of the reaction mass was next reduced to 150 °C. and dimethyl glutarate, 80.1 grams (0.5 mole), was added dropwise over a period of about 40 minutes. After the addition was complete, the temperature of the reaction mixture was raised to 175-180 °C. and maintained thereat for about 1 hour while the methanol was collected. A very viscous polyamino-copolyamide resulted which was poured into an aluminum pan. The polyaminocopolyamide had an I.V. of 0.140. Analysis of the product by nuclear magnetic resonance (NMR) indicated that 48 mole percent of the product contained oxamide-moieties and 52 mole percent glutaramide moieties.

Part B - 22.04 grams (0.10 mole) of the polyaminocopolyamide of Part A, and 101 ml of water were placed in a reaction vessel, the pH being 8.15. Epichlorohydrin, 11.6 grams (0.125 mole) was added, giving 25% reaction solids and the temperature of the resulting solution was raised to 62-65 °C., and the viscosity of the solution was monitored. When the Spence-Spurlin viscosity reached 29 seconds, 178 ml of water were added and the pH was adjusted to 2 with 10 molar HCl. The temperature was maintained at 45-47 °C. and periodic pH adjustments were made until the pH of 2 was constant for about 1 hour. The resulting solution had a total solids content of 10.79% by weight and a Brookfield viscosity of 19 mPas.

Examples 5 to 7

The procedure of Example 4, Parts A and B, was repeated except that the amounts of oxalic acid and dimethylglutarate were varied. Details of these examples and properties of the polyamides and the resins therefrom are set forth in Table 2 below.

Table 2

| | Ex. 5 | Ex. 6 | Ex. 7 |
|---|---|---|---|
| Polyamino-copolyamide | | | |
| Oxalic acid, mole | 0.4 | 0.3 | 0.2 |
| Dimethylglutarate, mole | 0.6 | 0.7 | 0.8 |
| I.V. | 0.142 | 0.134 | 0.134 |
| Resin Solution | | | |
| Total Solids (%) | 10.88 | 10.67 | 10.65 |
| Brookfield Viscosity, mPas | 19.0 | 18.2 | 17.5 |

Examples 8 to 11

The resin solutions of Examples 4 to 7 were activated for use using the procedure set forth in Example 2 and paper sheets were prepared using the resulting solutions and tested in accordance with the

procedure of Example 2. Strength properites of the sheets are set forth in Table 3 below.

Table 3

| Ex. No. | Resin of | Addition % of Pulp | Basis Weight | Tensile Strength (kg/m) Dry Uncured[1] | Dry Cured | Wet Uncured[1] | Wet Cured |
|---|---|---|---|---|---|---|---|
| 8 | Ex. 4 | 0.25 | 18.05 | 382.0 | 362.4 | 63.2 | 76.2 |
| | | 0.50 | 18.05 | 417.7 | 437.3 | 87.1 | 104.6 |
| | | 0.75 | 18.14 | 396.3 | 403.4 | 89.4 | 100.6 |
| 9 | Ex. 5 | 0.25 | 18.09 | 362.4 | 415.9 | 68.0 | 73.9 |
| | | 0.50 | 18.18 | 400.0 | 390.9 | 82.4 | 95.7 |
| | | 0.75 | 18.00 | 394.5 | 403.4 | 89.8 | 101.2 |
| 10 | Ex. 6 | 0.25 | 17.91 | 367.7 | 374.8 | 59.9 | 68.7 |
| | | 0.50 | 18.27 | 380.2 | 398.0 | 81.7 | 95.7 |
| | | 0.75 | 18.37 | 424.8 | 451.6 | 102.5 | 115.1 |
| 11 | Ex. 7 | 0.25 | 18.23 | 408.7 | 428.4 | 66.4 | 76.2 |
| | | 0.50 | 18.14 | 380.2 | 412.3 | 88.2 | 97.5 |
| | | 0.75 | 18.09 | 405.1 | 407 | 93.2 | 106.2 |
| Blank | | - | 18.14 | 323.0 | 319.5 | 10.5 | 11.24 |

(1) After 8 days of natural aging.

Examples 12 to 15

Paper sheets were prepared in accordance with the method of Example 2 using an amount (based on dry pulp) of the resins of Examples 4 to 7 to provide uncured sheets of substantially equivalent wet strength. The strength properties of these sheets are set forth in Table 4.

Table 4

| Ex. No. | Resin of | % Resin Added | Basis Weight | Tensile Strength (kg/m) Dry Uncured[1] | Cured | Wet Uncured[1] | Cured |
|---|---|---|---|---|---|---|---|
| 12 | Ex. 4 | 0.50 | 17.96 | 369.4 | 364.1 | 55.3 | 64.6 |
| 13 | Ex. 5 | 0.75 | 17.96 | 360.5 | 380.2 | 62.1 | 67.5 |
| 14 | Ex. 6 | 0.55 | 17.82 | 332.0 | 348.0 | 51.9 | 58.4 |
| 15 | Ex. 7 | 0.75 | 18.27 | 378.4 | 369.4 | 65.2 | 73.2 |

(1) After 4 days of natural aging.

The paper sheets were repulped in aqueous NaOH at a pH of 12 and a temperature of 85 ° C. The degree of repulping was measured at 5 and 10 minutes, and then every 10 minutes up to a total of 1 hour (or until Stage 6, essentially complete fiber separation, was reached) using the method set forth in Example 3. Test results are set forth in Table 5 below.

Table 5

| Example No. | Degree of Repulping (after minutes) | | | | | |
|---|---|---|---|---|---|---|
| | 5 | 10 | 20 | 30 | 40 | 50 |
| 12 | 1 | 3 | 5 | 6 | - | - |
| 13 | < 1 | 3 | 5 | 6 | - | - |
| 14 | 2 | 5 | 6 | - | - | - |
| 15 | < 1 | < 1 | 4 | 4 | 5 | 6 |

Example 16

Part A - Methylbis(3-aminopropyl)amine, 145.3 grams (1.0 mole) was charged to a resin kettle equipped with anchor stirrer, thermometer, heating mantle, nitrogen sparge, and Dean-Stark water trap with condenser, and the charge was heated to 133 ° C. Oxalic acid, 63.0 grams (0.7 mole), was added as a solid in small increments to keep the temperature below 145 ° C. After the addition was complete, the temperature was raised to 184-191 ° C. and was maintained thereat until the water of polycondensation was removed. The temperature of the reaction mass was next reduced to 150 ° C. and dimethyl glutarate, 48.1 grams (0.3 mole), was added over a period of about 1 hour. The temperature was then raised and maintained at 173-179 ° C. while the methanol was collected. The resulting, very viscous polyamino-copolyamide was poured into an aluminum pan. The product had an I.V. of 0.104 and contained, by NMR analyses, 31 mole percent glutaramide moieties and 69 mole percent oxamide moieties.

Part B - 42.46 grams of the polyamino-copolyamide of Part A, and 103.6 ml of water and 19.6 grams of 37.5% aqueous HCl were thoroughly mixed to provide a 30.6% aqueous solution of the resulting salt, the pH of the solution being 4.8. A portion equal to 81.39 grams of the aqueous solution (24.9 grams, 0.1 mole), was placed in a reaction vessel and the pH of the solution was adjusted to 8.0 with 8 ml of 5 molar NaOH. Epichlorohydrin, 11.6 grams (0.125 mole), and 45 ml of water were added to give 25% reaction solids. The temperature of the resulting solution was raised to 69-75 ° C. and the viscosity or the solution monitored. When the Spence-Spurlin viscosity reached 24.6 seconds, 196 ml of water were added and the pH was adjusted to 1.6 with 10 molar HCl. The temperature of the solution was maintained at 42-44 ° C. and periodic pH adjustments were made until the pH was constant for about 1 hour. The resulting solution had a solids

content of 10.3% by weight and a Brookfield viscosity of 21 mPas.

Examples 17 to 18

The procedure of Example 16, Parts A and B, was repeated except that the amounts of oxalic acid and dimethyl glutarate were varied. Details of these examples and properties of the polyamides and the resins therefrom are set forth in Table 6 below.

Table 6

| | Ex. 17 | Ex. 18 |
|---|---|---|
| Polyamino-copolyamide | | |
| Oxalic acid, mole | 0.80 | 0.90 |
| Dimethyl glutarate, mole | 0.20 | 0.10 |
| I.V. | 0.099 | 0.087 |
| Resin Solution | | |
| Total Resin Solids, % | 9.51 | 9.7 |
| Brookfield viscosity, mPas | 16.5 | 19.0 |

Examples 19 to 21

The resin solutions of Examples 16 to 18 were activated for use using the procedure set forth in Example 2 and paper sheets were prepared using the resulting solutions and tested in accordance with the procedure of Example 2. Strength properties of the sheets are set forth in Table 7 below.

Table 7

| | | Addition | | Tensile Strength (kg/m) | | | |
|---|---|---|---|---|---|---|---|
| | | | | Dry | | Wet | |
| Ex. No. | Resin of | % of Pulp | Basis Weight | Uncured | Cured | Uncured | Cured |
| 19 | Ex. 16 | 0.25 | 17.87 | 374.8 | 396.3 | 52.5 | 68.9 |
| | | 0.50 | 18.18 | 394.5 | 417.7 | 71.2 | 86.2 |
| | | 0.75 | 17.91 | 393.8 | 392.7 | 80.8 | 92.1 |
| 20 | Ex. 17 | 0.25 | 18.14 | 376.6 | 378.4 | 49.6 | 58.5 |
| | | 0.50 | 17.87 | 373.1 | 367.7 | 61.6 | 72.8 |
| | | 0.75 | 18.00 | 403.4 | 417.7 | 75.0 | 90.5 |
| 21 | Ex. 18 | 0.25 | 17.82 | 400.0 | 390.9 | 62.8 | 68.9 |
| | | 0.50 | 17.87 | 390.9 | 403.4 | 77.3 | 86.2 |
| | | 0.75 | 18.05 | 392.7 | 410.5 | 85.7 | 97.3 |
| Blank | | - | 18.14 | 308.9 | 315.9 | 10.7 | 10.7 |

Examples 22 to 24

Paper sheets were prepared in accordance with the method of Example 2 using an amount (based on dry pulp) of the resins of Examples 16 to 18 to provide uncured sheets of substantially equivalent wet strength. The strength properties of these sheets are set forth in Table 8.

Table 8

| | | Addition | | Tensile Strength (kg/m) | | | |
|---|---|---|---|---|---|---|---|
| | | | | Dry | | Wet | |
| Ex. No. | Resin of | % of Pulp | Basis Weight | Uncured | Cured | Uncured | Cured |
| 22 | Ex. 16 | 0.80 | 18.18 | 374.8 | 408.7 | 76.4 | 87.6 |
| 23 | Ex. 17 | 0.90 | 18.27 | 374.8 | 408.7 | 75.9 | 88.9 |
| 24 | Ex. 18 | 0.75 | 18.37 | 373.1 | 421.3 | 70.1 | 83.5 |
| Blank | | - | 17.96 | 367.7 | 351.6 | 10.5 | 11.2 |

The paper sheets were repulped in aqueous NaOH at a pH of 12 and a temperature of 85°C. The degree of repulping was measured in the manner of Examples 12 to 15 and the results are set forth in Table 9.

Table 9

| Example No. | Degree of Repulping (after minutes) | | |
|---|---|---|---|
| | 5 | 10 | 20 |
| 22 | 2 | 4 | 6 |
| 23 | 2 | 4 | 6 |
| 24 | 2 | 4 | 6 |

Example 25

Part A - Methylbisaminopropylamine, 145.3 grans (1.0 mole), was charged to the kettle of Example 1 and heated to 105° C. Oxalic acid dihydrate, 88.25 grams (0.7 mole), was dissolved in 228 ml of water at 45° C. and the oxalic acid solution was added dropwise to the kettle over a period of 35 minutes while maintaining the contents at 105-110° C. After completion of the addition, the temperature was raised to 186° C. and maintained thereat until the water was removed (about 4-5 hours). The temperature of the reaction mass was next decreased to 150° C. and 48.05 grams (0.3 mole) of dimethyl glutarate were added dropwise over 9 minutes. The temperature of the mixture was raised to 184° C. and maintained thereat for 1 hour while the methanol was removed. The resulting polyamide was recovered by pouring into a pan and had an I.V. of 0.104 (determined as the hydrochloride salt).

Part B - 21.2 grams of the polyamino-copolyamide of Part A, 51.8 ml of water, and 9.8 grams of 37.5% aqueous HCl were thoroughly mixed to provide a 30.62% aqueous solution of the resulting salt, the pH of the solution being 6.1. A portion of the solution equal to 72.96 grams (0.09 mole) was placed in a reaction vessel and the pH was adjusted to 8.2 with 4.6 ml of 5 molar NaOH. Epichlorohydrin, 10.43 grams (0.112 mole), and then 43 ml of water were added to give 25% reaction solids. The temperature of the mixture was raised to 70-80° C. and the viscosity of the solution was monitored. When the Spence-Spurlin viscosity reached 22.8 seconds, 176 ml of water were added and the pH was adjusted to 1.7 with 10 molar HCl. The temperature of the solution as maintained at 43-45° C. and periodic pH adjustments were made until the pH was constant for about 1 hour. The resulting solution had a solids content of 10.2% by weight and a Brookfield viscosity of 20.5 mPas.

Example 26

Part A - The general procedure of Example 25, Part A, was repeated except that the oxalic acid dihydrate was dissolved in 161 ml of water at 60° C. and, following removal of methanol, the temperature of the product was decreased to 115° C. and 314 ml of hot water (70-75° C.) and 51.2 grams of 37.5% HCl were added dropwise over 15 minutes to give a clear orange solution of pH 7.4 and a total solids of 41.8%. The resulting polyamino-copolyamide had an I.V. of 0.100.

Part B - A portion of the solution of Part A equal to 82.37 grams and 107.5 ml of water were placed in a reaction vessel, the pH being 8.5. Epichlorohydrin, 17.4 grams, was added and the temperature was raised to 64-72° C. When the Spence-Spurlin viscosity reached 30 seconds, 276 ml of water were added and the pH was adjusted to 2.0 with 10 molar HCl. The temperature was maintained at 40-45° C. and periodic pH adjustments were made until the pH was constant for about 1 hour. The resulting solution had a solids content of 10.98% and a Brookfield viscosity of 23.4 mPas.

Examples 27-28

The resin solutions of Examples 25 and 26 were activated for use using the procedure set forth in Example 2 and paper sheets were prepared using the resulting solutions and tested in accordance with the procedure of Example 2. Strength properties of the sheets are set forth in Table 10 below.

Table 10

| Ex. No. | Resin of | Addition % of Pulp | Basis Weight | Tensile Strength (kg/m) Dry Uncured | Dry Cured | Wet Uncured | Wet Cured |
|---|---|---|---|---|---|---|---|
| 27 | Ex. 25 | 0.25 | 18.46 | 390.9 | 400.0 | 55.9 | 59.0 |
| | | 0.50 | 18.14 | 390.9 | 376.6 | 62.3 | 68.9 |
| | | 0.75 | 18.50 | 405.1 | 387.3 | 73.9 | 85.3 |
| Blank | | - | 17.96 | 330.2 | 317.7 | 10.1 | 10.1 |
| 28 | Ex. 26 | 0.25 | 17.96 | 333.8 | 333.8 | 46.9 | 56.4 |
| | | 0.50 | 17.91 | 367.7 | 353.4 | 59.3 | 67.8 |
| | | 0.75 | 17.82 | 367.7 | 360.6 | 70.3 | 80.1 |
| Blank | | - | 18.05 | 340.9 | 324.9 | 10.5 | 11.9 |

Example 29

Example 28 was repeated except that Chesapeake unbleached kraft pulp was substituted for the mixture of bleached kraft pulp of Example 2. The strength properties of the sheets are tabulated below in Table 11.

Table 11

| % of Resin Added | Basis Weight | Tensile Strength (kg/m) Dry Uncured | Dry Cured | Wet Uncured | Wet Cured |
|---|---|---|---|---|---|
| 0.25 | 18.73 | 485.5 | 474.8 | 68.5 | 73.9 |
| 0.50 | 18.41 | 478.4 | 481.9 | 94.4 | 100.8 |
| 0.75 | 18.73 | 471.2 | 476.6 | 104.4 | 119.2 |
| Blank | 18.37 | 357 | 353.4 | 11.8 | 13.6 |

Example 30

Part A - Methylbis(3-aminopropyl)amine, 145.3 grams (1 mole) was placed into a reaction vessel and heated to 160°C. Diethyl oxalate, 146.0 grams (1 mole), was added dropwise keeping the temperature of the reaction mass between about 160°C. and about 170°C. After the addition was complete, the temperature of the reaction mass was allowed to rise to about 190-195°C. over a period of about 20 minutes. A very viscous polyaminopolyamide resulted, which was poured into an aluminum pan. The yield of polyaminopolyamide was 191 grams, and it had an intrinsic viscosity of 0.92 at 25°C., measured as a 1% solution in m-cresol.

Part B - Sixty grams of the polyaminopolyamide of Part A, 147 ml of water, and 29.5 grams of 37.3% aqueous HCl were thoroughly admixed to provide a 30.2% aqueous solution of the resulting salt, the pH of the solution being about 3.3. Fifty-eight and two-tenths grams of the 30.2% aqueous solution (17.75 grams, 0.075 mole, of resin solids) were placed in a reaction vessel, and the pH of the solution was adjusted to 7.9 with 5 molar NaOH. Epichlorohydrin, 10.4 grams (0.113 mole), was added, together with 43 ml of water, to give 25% solids. The temperature of the resulting solution, which was at room temperature (about 25° C.), was raised to 50-53° C. and the viscosity of the solution monitored. When the Gardner-Holdt viscosity reached F, 134 ml of water were added and the pH was adjusted to 2 with 10 molar HCl. Periodic pH adjustments were made until the pH of 2 was constant for about 60 minutes. The resulting solution had a solids content of about 8.8 by weight.

Example 31

Part A - Methyl bis(3-aminopropyl) amine, 218.0 grams (1.50 moles), was charged to a resin kettle equipped with anchor stirrer, thermometer, nitrogen sparge, and Dean-Stark water trap with condenser. The amine was heated to 160° C., and diethyl oxalate, 219.0 grams (1.50 mole), was added dropwise during 67 minutes while the temperature was maintained between 155-174° C. After ester addition was complete, the polyamide melt was held between 170-176° C. for 33 minutes, then decanted and cooled. The polyamide had a reduced specific viscosity ($\eta$sp/c) = 0.803 in m-cresol, as determined at c = 2 g/100 ml at 25° C.

Part B - Sixty grams of the polyamide of Part A were dissolved in a solution of 29.5 g. of 37% hydrochloric acid and 147 ml of water. A 55.8 g. portion of this solution (representing 14.15 g of polyamide, 6.95 g. of 37% hydrochloric acid, and 34.7 ml $H_2O$) was charged to a flask equipped with a stirrer, thermometer, and reflux condenser. The pH was adjusted from 6.5 to about 8 with 30 ml (31.4 g.) of 4% sodium hydroxide, and the charge was diluted with 16 ml additional water. The resulting solution was then warmed to 32° C., and then 10.4 g. of epichlorohydrin were added during 8 minutes. The resulting mixture was held between 46°-55° C. for 44 minutes, during which time the Gardner-Holt viscosity rose to F (sample cooled to 25° C.). The resin solution was then diluted with 134 g. of water and adjusted to a pH of 2 with 0.5 ml (0.59 g.) of 37% hydrochloric acid. The resin was then heated to 80° C. and maintained there for 108 minutes while 37% hydrochloric acid was added on demand to maintain pH near 2. A total of 4.5 ml (5.35 g.) of 37% HCl was added during this stabilization step. The resulting solution contained about 10.3% non-volatile solids and had a Brookfield viscosity of about 21 mPas (#2 spindle, 60 r.p.m., 25° C.)

Example 32

Fifty-five and eight-tenths grams of the polyaminopolyamide of Part A of Example 30, 137 ml of water, and 27.4 grams of 37.3% aqueous HCl were thoroughly admixed to provide a 29.9% aqueous solution of the resulting salt, the pH of the solution being about 2. 78.8 g. of the 29.9% aqueous solution (23.55 grams, 0.1 mole, of resin solids) were placed into a reaction vessel, and the pH of the solution adjusted to 7.5 with 5 molar NaOH. Epichlorohydrin, 13.89 grams (0.15 mole), was added, together with 53 ml of water, to give 25% solids. The temperature of the resulting solution, which was at room temperature (about 25° C.), was raised to 48-50° C. and the viscosity of the solution monitored. When the Gardner-Holdt viscosity reached E+, 224 ml of water were added and the pH was adjusted to 2 with concentrated HCl. Periodic pH adjustments were made until the pH of 2 was constant for about 60 minutes. The resulting solution had a solids content of about 8.35% by weight.

Examples 33 to 35

The resin solutions of Examples 30-32 were activated for use using the procedure set forth in Example 2. Paper sheets were prepared using the resulting solutions and tested in accordance with the procedure of Example 2. Strength properties of the sheets are set forth in Table 12.

Table 12

| | | Addition | | Tensile Strength (kg/m) | | | |
|---|---|---|---|---|---|---|---|
| Ex. | Resin | % of | Basis | Dry | | Wet | |
| No. | of | Pulp | Weight | Uncured | Cured | Uncured | Cured |
| 33 | 30 | 0.25 | 18.09 | 349.9 | 360.6 | 64.6 | 73.2 |
| | | 0.50 | 18.05 | 335.6 | 355.2 | 83.7 | 89.6 |
| | | 1.00 | 18.18 | 355.2 | 392.7 | 91.9 | 98.0 |
| 34 | 31 | 0.25 | 17.82 | 362.3 | - | 46.6 | - |
| | | 0.50 | 17.87 | 362.3 | - | 52.1 | - |
| | | 0.75 | 17.78 | 360.6 | - | 51.0 | - |
| | | 1.00 | 18.00 | 374.9 | - | 53.7 | - |
| 35 | 32 | 1.00 | 18.18 | 355.2 | 382.0 | 61.2 | 91.6 |

Examples 36 to 38

Paper sheets were prepared in accordance with the procedure of Example 2. The uncured sheets were repulped in aqueous NaOH at a pH of 12 and a temperature of 85° C. The degree of repulping was measured in the manner of Example 3, and the results are set forth in Table 13.

Table 13

| Resin of | Ex. 36 | Ex. 37 | Ex. 38 |
|---|---|---|---|
| Example No. | 30 | 31 | 32 |
| Addition, % of pulp | 1.0 | 0.5 | 1.0 |
| Basis Weight, kg/ream | 18.14 | 17.96 | 18.18 |
| Dry Tensile, kg/m | 374.8 | 355.2 | 355.2(1) |
| Wet Tensile, kg/m | 95.3 | 50.9 | 61.22(1) |
| Wet/Dry Tensile, % | • | 14.3 | 17.2 |
| Time for Complete Repulping, minutes | 60 | 20 | 20 |

(1) One day natural aging.

Example 39

Part A - Methylbis(3-aminopropyl)amine, 145.3 grams (1 mole) was charged to a resin kettle equipped with anchor stirrer, thermometer, heating mantle, nitrogen sparge, and Dean-Stark water trap with condenser and the charge was heated to 150° C. Dimethyl adipate, 43.55 grams (0.25 mole) and diethyl oxalate, 109.6 grams (0.75 mole), were combined and added dropwise keeping the temperture of the reaction mass between about 147° C. and about 150° C. After the addition was complete (about 1 hour), the temperature of the reaction mass was allowed to rise to about 190-195° C. and the alcohol was collected and the reaction mixture was maintained at 195° C. for a period of about 20 minutes. A very viscous polyamino-copolyamide resulted, which was poured into an aluminum pan. The yield of polyamino-copolyamide was 194 grams, and it had an I.V. of 0.141.

Part B - 25.6 grams of the polyamino-copolyamide of Part A, 62.5 ml of water, and 11.75 grams of 37.5% aqueous HCl were thoroughly admixed to provide a 28.9% aqueous solution of the resulting salt, the pH of the solution being 4.65. 86.44 grams of the 28.9% aqueous solution (25 grams, 0.1 mole, of resin solids) were placed into a reaction vessel together with 44.5 ml of water, and the pH of the solution was adjusted to 8.0 with 3.9 ml of 5 molar NaOH. Epichlorohydrin, 11.6 grams (0.125 mole), was added and the temperature of the resulting solution, which was at room temperature (about 25° C.), was raised to 52-72° C., and the viscosity of the solution monitored. When the Gardner-Holdt viscosity reached E, 220 ml of water were added and the pH was adjusted to 2 with 10 molar HCl. Periodic pH adjustments were made until the pH of 2 was constant for about 60 minutes. The resulting solution had a solids content of 9.73% by weight and a Brookfield viscosity of 15 mPas.

Example 40

Part A - The procedure of Example 39, Part A, was repeated except that 87.1 grams (0.5 mole) of dimethyl adipate and 73.1 grams (0.5 mole) of diethyl oxalate were used. The yield of polyamino-copolyamide was 205 grams, and it had an I.V. of 0.146.

Part B - 27.25 grams of the polyamino-copolyamide of Part A, 64 ml of water and 11.75 grams of 37.5% HCl were thoroughly mixed to provide a 29.5% aqueous solution of the resulting salt, the pH of the solution being 4.45. 84.7 grams of the 29.5% aqueous solution (25 grams, 0.095 mole of resin solids) were placed in a reaction vessel with 43 ml of water, and the pH was adjusted to 8.1 with 4.45 ml of 5 molar NaOH. Epichlorohydrin, 10.9 grams (0.118 mole), was added and the temperature of the resulting solution was raised to 67-72° C., and the viscosity of the solution was monitored. When the Gardner-Holdt viscosity reached E-F, 2.5 ml of water were added and the pH was adjusted to 2 with 10 molar HCl. Periodic pH adjustments were made until the pH was constant for about 60 minutes. The resulting solution had a solids content of 9.62% and a Brookfield viscosity of 19.4 mPas.

Example 41

Part A - The procedure of Example 39, Part A, was repeated except that 103.7 grams (0.75 mole) of dimethyl adipate and 36.5 grams (0.25 mole) of diethyl oxalate were used. The polyamino-copolyamide had an I.V. of 0.137.

Part B - 28.9 grams of the polyamino-copolyamide of Part A, 70.4 ml of water and 11.75 grams of 37.5% HCl were thoroughly mixed to provide a 29.13% aqueous solution of the resulting salt, the pH of the solution being 4.3. 95.7 grams of the 29.13% aqueous solution (27.9 grams, 0.10 mole of resin solids) were placed in a reaction vessel with 47 ml of water and the pH was adjusted to 8.1 with 4 ml of 5 molar NaOH. Epichlorohydrin, 11.6 grams (0.125 mole), was added and the temperature of the resulting solution was raised to 69-72° C., and the viscosity of the solution was monitored. When the Gardner-Holdt viscosity reached E-F, 237 ml of water were added, and the pH was adjusted to 2 with 10 molar HCl. Periodic pH adjustments were made until the pH was constant for about 60 minutes. The resulting solution had a solids content of 9.73% and a Brookfield viscosity of 17 mPas.

Example 42

Part A - The procedure of Example 39, Part A, was repeated except that 40.1 grams (0.25 mole) of dimethyl glutarate were substituted for the 43.55 grams of dimethyl adipate. The yield of polyamino-copolyamide was 185 grams and had an I.V. of 0.161.

Part B - 25.1 grams of the polyamino-copolyamide of Part A, 61.4 ml of water and 11.75 grams of 37.5% HCl were thoroughly mixed to provide a 29.22% aqueous solution of the resulting salt, the pH of the solution being 6.5. 85.56 grams of the 29.22% aqueous solution (25.0 grams, 0.101 mole of resin solids) were placed in a reaction vessel with 46 ml of water, and the pH was adjusted to 8.05 with 3.3 ml of 5 molar NaOH. Epichlorohydrin, 11.6 grams (0.125 mole), was added and the temperature of the resulting solution was raised to 65-71° C., and the viscosity of the solution was monitored. When the Gardner-Holdt viscosity reached E-F, 220 ml of water were added, and the pH was adjusted to 2 with 10 molar HCl. The resulting solution had a solids content of 9.7% and a Brookfield viscosity of 19.2 mPas.

Example 43

Part A - The procedure of Example 40, Part A, was repeated except that 80.1 grams (0.5 mole) of

dimethyl glutarate were substituted for the 87.1 grams of dimethyl adipate. The yield of polyamino-copolyamide was 197 grams, and it had an I.V. of 0.152.

Part B - 26.4 grams of the polyamino-copolyamide of Part A, 64.5 ml of water, and 11.75 grams of 37.5% HCl were thoroughly mixed to provide a 29.2% aqueous solution of the resulting salt, the pH of the solution being 6.65. 85.58 grams of the 29.2% aqueous solution (25.0 grams, 0.098 mole of resin solids) were placed in a reaction vessel with 45.8 ml of water, and the pH was adjusted to 8.0 with 2.1 ml of 5 molar NaOH. Epichlorohydrin, 11.3 grams (0.123 mole), was added and the temperature of the resulting solution was raised to 67-72° C. and the viscosity of the solution was monitored. When the Gardner-Holdt viscosity reached E-F, 362 ml of water were added and the pH was adjusted to 2 with 10 molar HCl. The resulting solution had a solids content of 9.7% and a Brookfield viscosity of 17.5 mPas.

Example 44

Part A - The procedure of Example 41, Part A, was repeated except that 120.2 grams (0.75 mole) of dimethyl glutarate were substituted for the 130.7 grams of dimethyl adipate. The polyamino-copolyamide had an I.V. of 0.141.

Part B - 27.7 grams of the polyamino-copolyamide of Part A, 67.5 ml of water and 11.75 grams of 37.5% HCl were thoroughly mixed to provide a 28.57% aqueous solution of the resulting salt, the pH of the solution being 6.6. 87.5 grams of the 28.57% aqueous solution (25.0 grams, 0.098 mole of resin solids) were placed in a reaction vessel with 42 ml of water and the pH was adjusted to 8.0 with 2.3 ml of 5 molar NaOH. Epichlorohydrin, 10.8 grams (0.117 mole), was added and the temperature of the resulting solution was raised to 63-76° C. and the viscosity of the solution was monitored. When the Gardner-Holdt viscosity reached E-F, 215 ml of water were added, and the pH was adjusted to 2 with 10 molar HCl. The resulting solution had a solids content of 9.7% and a Brookfield viscosity of 18 mPas.

Examples 45 to 50

The resin solutions of Examples 39 to 44 were activated for use using the procedure set forth in Example 2 and paper sheets were prepared using the resulting solutions and tested in accordance with the procedure of Example 2. Strength properties of the sheets are set forth in Table 14 below.

Table 14

| Ex. No. | Resin of | Addition % of Pulp | Basis Weight | Tensile Strength(kg/m) Dry Uncured | Dry Cured | Wet Uncured | Wet Cured |
|---|---|---|---|---|---|---|---|
| 45 | Ex. 39 | 0.25 | 18.41 | 380.2 | 389.1 | 56.2 | 58.2 |
| | | 0.50 | 18.18 | 400.0 | 392.7 | 69.4 | 72.6 |
| | | 0.75 | 18.32 | 415.9 | 426.6 | 84.2 | 89.4 |
| 46 | Ex. 40 | 0.25 | 18.37 | 389.1 | 378.4 | 48.2 | 48.7 |
| | | 0.50 | 18.37 | 390.9 | 407 | 69.8 | 70.7 |
| | | 0.75 | 18.23 | 380.2 | 396.3 | 78.0 | 77,5 |
| 47 | Ex. 41 | 0.25 | 18.37 | 383.8 | 387.3 | 43.9 | 45.9 |
| | | 0.50 | 18.23 | 373.1 | 380.2 | 55.7 | 56.2 |
| | | 0.75 | 18.09 | 378.4 | 382 | 63.5 | 67.8 |
| 48 | Ex. 42 | 0.25 | 18.09 | 369.5 | 389.1 | 54.3 | 56.6 |
| | | 0.50 | 18.18 | 383.8 | 403.4 | 64.4 | 73.0 |
| | | 0.75 | 18.14 | 400.0 | 408.7 | 79.8 | 84.8 |
| 49 | Ex. 43 | 0.25 | 18.27 | 380.2 | 376.6 | 53.5 | 56.4 |
| | | 0.50 | 18.23 | 401.6 | 374.8 | 65.5 | 70.5 |
| | | 0.75 | 18.27 | 407 | 408.7 | 78.5 | 83.7 |
| 50 | Ex. 44 | 0.25 | 18.14 | 371.3 | 373.1 | 47.6 | 51.8 |
| | | 0.50 | 18.27 | 378.4 | 362.4 | 61.4 | 56.2 |
| | | 0.75 | 18.64 | 382.0 | 382.0 | 70.7 | 76.0 |
| Blank | - | - | 18.09 | 337.4 | 339.1 | 10.35 | 11.1 |

Examples 51 to 54

Paper sheets were prepared in accordance with the method of Example 2 using an amount (based on dry pulp) of the resins of Examples 39, 40, 42, and 43 to provide uncured sheets of substantially equivalent wet strength. The strength properties of these sheets are set forth in Table 15.

Table 15

| Ex. No. | Resin of | % Resin Added | Basis Weight | Tensile Strength (kg/m) Dry Uncured | Dry Cured | Wet Uncured | Wet Cured |
|---|---|---|---|---|---|---|---|
| 51 | Ex. 39 | 0.70 | 18.05 | 353.4 | 351.6 | 65.9 | 71.7 |
| 52 | Ex. 40 | 0.80 | 18.14 | 355.2 | 344.5 | 66.4 | 70.3 |
| 53 | Ex. 42 | 0.75 | 18.18 | 344.5 | 357.0 | 65.0 | 68.7 |
| 54 | Ex. 43 | 0.75 | 18.18 | 357.0 | 365.9 | 67.8 | 69.6 |
| Blank | - | - | 18.09 | 317.7 | 321.3 | 10.7 | 10.5 |

The paper sheets were repulped in aqueous NaOH at a pH of about 12 and a temperature of about 85° C. The degree of repulping was measured at 5 and 10 minutes, and then every 10 minutes up to a total of 1 hour (or until Stage 6, essentially complete fiber separation, was reached) using the method set forth in Example 3. Test results are set forth in Table 16 below.

Table 16

| Example No. | Degree of Repulping (after minutes) | | | |
|---|---|---|---|---|
| | 5 | 10 | 20 | 30 |
| 51 | 1 | 3 | 5 | 6 |
| 52 | < 1 | 3 | 5 | 6 |
| 53 | 1 | 3 | 5 | 6 |
| 54 | 1 | 3 | 5 | 6 |

Examples 55 to 57

Polyamino-copolyamides were prepared according to the procedures of Examples 42-44, Part A, and 0.10 mole of each of the resulting polyamino-copolyamides, as its acid salt solution, was reacted with 0.125 mole of epichlorohydrin at a solids content of 25%, a pH of 8.0, and a temperature of 65-77° C. until the Gardner-Holdt viscosity reached E-F, after which time the resin solution was diluted with water and the pH was adjusted to 1-2 according to the general procedure of Example 39, Part B.

The resin solutions prepared above were activated and used to prepare paper sheets in accordance with the procedure of Example 2. Details of these examples are set forth in Table 17, and the strength properties of the paper sheets are set forth in Table 18 below.

Table 17

| Example | 55 | 56 | 57 |
|---|---|---|---|
| Reactants (mole) | | | |
| Methylbis(3-aminopropyl)amine | 1.0 | 1.0 | 1.0 |
| Diethyl oxalate | 0.75 | 0.50 | 0.25 |
| Dimethyl glutarate | 0.25 | 0.50 | 0.75 |
| I.V. of Polyamide | 0.161 | 0.152 | 0.141 |
| Resin Solution | | | |
| Total Solids, % | 8.9 | 9.2 | 9.4 |
| Brookfield Viscosity, mPas | 20.7 | 16.8 | 16.4 |

Table 18

| Ex. No. | Addition % of Pulp | Basis Weight | Tensile Strength(kg/m) | | | |
|---|---|---|---|---|---|---|
| | | | Dry | | Wet | |
| | | | Uncured[1] | Cured | Uncured[1] | Cured |
| 55 | 0.25 | 18.37 | 355.2 | 385.6 | 50.7 | 71.6 |
| | 0.50 | 18.32 | 387.3 | 410.5 | 75.7 | 94.8 |
| | 0.75 | 18.46 | 405.2 | 440.9 | 85.5 | 100.7 |
| 56 | 0.25 | 18.23 | 373.1 | 387.3 | 56.2 | 70.5 |
| | 0.50 | 18.23 | 371.3 | 405.2 | 71.2 | 89.2 |
| | 0.75 | 18.46 | 396.3 | 435.5 | 81.6 | 100.7 |
| 57 | 0.25 | 18.55 | 350 | 362.4 | 47.8 | 56.0 |
| | 0.50 | 18.50 | 348.1 | 403.4 | 60.9 | 72.8 |
| | 0.75 | 18.37 | 392.7 | 389.1 | 68.4 | 91.9 |
| Blank | - | 18.41 | 321.3 | 341 | 8.56 | 10.9 |

Examples 58 to 60

Paper sheets were prepared in accordance with the method of Example 2 using an amount (based on dry pulp) of the resins of Examples 55 to 57 to provide uncured sheets of substantially equivalent wet strength. The strength properties of these sheets are set forth in Table 19.

Table 19

| Example Number | Resin of | % Resin Added | Basis Weight | Wet Tensile Strength kg/m , uncured |
|---|---|---|---|---|
| 58 | Ex. 55 | 0.75 | 18.37 | 77.8 |
| 59 | Ex. 56 | 0.80 | 18.14 | 78.5 |
| 60 | Ex. 57 | 1.00 | 18.18 | 72.3 |
| Blank | - | - | 18.23 | 9.81 |

The paper sheets were repulped in aqueous NaOH at a pH of about 12 and a temperature of about 85 ° C. The degree of repulping was measured in the manner of Examples 51 to 54. The results are set forth in Table 20.

Table 20

| Example No. | Degree of Repulping (after minutes) | | | | |
|---|---|---|---|---|---|
| | 5 | 10 | 20 | 30 | 40 |
| 58 | < 1 | 2 | 5 | 6 | - |
| 59 | < 1 | 2 | 5 | 6 | - |
| 60 | 1 | 2 | 4 | 5 | 6 |

It is to be understood that the resin solutions prepared in accordance with this invention can be used to impart wet and dry strength to paper without first being stabilized against premature gelation followed by reactivation with base. Thus, if the resin solution is to be used promptly, there is no need to go through the stabilization and reactivation steps. However, as is usually the case, the resin solution will be stored for a period of time prior to use, during which time premature gelation can occur. Thus, it is recommended that pH adjustment to ensure against premature gelation be made during the manufacturing process.

The above description and working examples are illustrative of this invention and not in limitation thereof.

**Claims**

1. Process for preparing an aqueous solution of a water-soluble, cationic thermosetting resin exhibiting high wet strength properties and providing a paper broke which is easily reworked, which process consists of reacting methylbis (3-aminopropyl) amine in a mole ratio of 0,9:1 to 1,2:1 with a saturated dicarboxylic acid component wherein at least 20 mole percent of the acid component is oxalic acid or a diester of oxalic acid, whereby when the entire dicarboxylic acid component is oxalic acid, or when the acid component contains oxalic acid as well as different dicarboxylic acids or esters and the oxalic acid is added before the other dicarboxylic acid components, then said oxalic acid is added gradually to the amine over a period of time sufficient to maintain the temperature at below 150 ° C to prevent decomposition of the acid prior to reaction with the amine, to prepare a polyaminopolyamide containing tertiary amine groups, and then reacting the polyaminopolyamide in aqueous solution with 1-1,5 moles (per mole tertiary amine) of an epihalohydrin.

2. Process of Claim 1 in which the polyaminopolyamide is in the form of its acid salt, said acid salt being prepared by adding to an aqueous dispersion of the polyaminopolyamide a water-soluble acid in an amount essentially stoichiometrically equivalent to the tertiary amines of the polyaminopolyamide.

3. Process of Claim 1 or 2 in which the acid component also comprises from 20 to 80 mole percent of a diester of a saturated dicarboxylic acid containing at least 4 carbon atoms.

4. Process of Claim 3 in which the dicarboxylic acid is glutaric acid or adipic acid.

**5.** Process of Claim 1 in which, following reaction of the epihalohydrin with the polyaminopolyamide, the aqueous solution is adjusted to and maintained at a pH below about 3.

**Revendications**

**1.** Procédé de préparation d'une solution aqueuse d'une résine thermodurcissable cationique hydrosoluble qui présente des propriétés de résistance élevée à l'état humide et qui donne des cassés de papier faciles à recycler, lequel procédé consiste à faire réagir de la méthylbis(3-aminopropyl)amine, dans un rapport molaire de 0,9:1 à 1,2:1, avec un composant acide dicarboxylique saturé, 20% en moles au moins du composant acide étant de l'acide oxalique ou un diester d'acide oxalique, de telle sorte que quand le composant acide dicarboxylique est entièrement constitué par de l'acide oxalique, ou quand le composant acide contient de l'acide oxalique ainsi que des acides ou esters dicarboxyliques différents et que l'acide oxalique est ajouté avant les autres composants acides dicarboxyliques, ledit acide oxalique est ajouté peu à peu à l'amine, en une période de temps suffisante pour maintenir la température au-dessous de 150 ° C afin d'éviter la décomposition de l'acide avant qu'il ne réagisse avec l'amine, pour préparer un polyaminopolyamide contenant des groupements amine tertiaire, puis à faire réagir le polyaminopolyamide en solution aqueuse avec 1 à 1,5 mole (par mole d'amine tertiaire) d'une épihalogénhydrine.

**2.** Procédé selon la revendication 1, dans lequel le polyaminopolyamide est sous la forme de son sel d'acide, ledit sel d'acide étant préparé par addition, à une dispersion aqueuse du polyaminopolyamide, d'un acide hydrosoluble dans une quantité pratiquement équivalente stoechiométriquement aux amines tertiaires du polyaminopolyamide.

**3.** Procédé selon la revendication 1 ou 2, dans lequel ledit composant acide comprend également de 20 à 80% en moles d'un diester d'un acide dicarboxylique saturé contenant au moins 4 atomes de carbone.

**4.** Procédé selon la revendication 3, dans lequel l'acide dicarboxylique est l'acide glutarique ou l'acide adipique.

**5.** Procédé selon la revendication 1, dans lequel, à la suite de la réaction de l'épihalogénhydrine avec le polyaminopolyamide, la solution aqueuse est réglée et maintenue à un pH inférieur à 3 environ.

**Patentansprüche**

**1.** Verfahren zur Herstellung einer wässrigen Lösung eines wasserlöslichen, kationischen, wärmehärtenden Harzes, welches eine hohe Nassfestigkeit zeigt und einen Papierabfall liefert, der leicht aufgearbeitet werden kam wobei das Verfahren darin besteht, dass man Methyl-bis(3-aminopropyl)amin mit einer gesättigten Dicarbonsäurekomponente, wobei wenigstens 20 Molprozent der Säurekomponente Oxalsäure oder ein Oxalsäurediester sind, in einem Molverhältnis von 0,9 : 1 bis 1,2 : 1 umsetzt, wobei man, wenn die gesamte Dicarbonsäurekomponente Oxalsäure ist, oder, wenn die Säurekomponente sowohl Oxalsäure als auch davon verschiedene Dicarbonsäuren oder -ester enthält, die Oxalsäure vor den anderen Dicarbonsäurekomponenten zugibt, dann das Amin allmählich mit der Oxalsäure versetzt, wobei die Zugabe während einer Zeitspanne vorgenommen wird, die ausreichend gross ist, um die Temperatur unterhalb 150 ° C zu halten, um so eine Zersetzung der Säure vor der Umsetzung mit dem Amin zu verhüten und ein Polyaminopolyamid mit tertiären Aminogruppen zu erhalten, und danach das Polyaminopolyamid in wässriger Lösung mit 1 bis 1,5 Mol (je Mol tertiäres Amin) eines Epihalogenhydrins umsetzt.

**2.** Verfahren nach Anspruch 1, bei dem man das Polyaminopolyamid in Form seines Säuresalzes einsetzt, wobei das Säuresalz durch Zugabe einer wasserlöslichen Säure zu einer wässrigen Dispersion des Polyaminopolyamides in einer im wesentlichen stöchiometrischen Menge in Bezug auf die tertiären Aminogruppen des Polyaminopolyamides herstellt.

**3.** Verfahren nach Anspruch 1 oder 2, bei dem die verwendete Säurekomponente ausserdem 20 bis 80 Molprozent eines Diesters einer gesättigten Dicarbonsäure mit wenigstens 4 Kohlenstoffatomen enthält.

**4.** Verfahren nach Anspruch 3, bei dem die Dicarbonsäure Glutarsäure oder Adipinsäure ist.

**5.** Verfahren nach Anspruch 1, bei dem man in der nachfolgenden Umsetzung des Epihalogenhydrins mit dem Polyaminopolyamid die wässrige Lösung auf einen pH von annähernd 3 einstellt und aufrechterhält.